# FASCICULE DE BREVET EUROPEEN

(11) **EP 2 773 250 B1**
(45) Date de publication et mention de la délivrance du brevet: **08.07.2015**
(21) Numéro de dépôt: 12778731.5
(22) Date de dépôt: 26.10.2012
(51) Int. Cl.: A47J 45/07, A47J 45/10

(54) **DISPOSITIF AMOVIBLE DE PREHENSION POUR RECIPIENT DE CUISSON SANS INDEXATION**
ABNEHMBARE GREIFVORRICHTUNG FÜR EIN KOCHGEFÄSS OHNE INDEXIERUNG
REMOVABLE GRIPPING DEVICE FOR A COOKING VESSEL WITHOUT INDEXING

(30) Priorité: 04.11.2011 FR 1159995
(43) Date de publication de la demande: 10.09.2014
(73) Titulaire: AMEFA France SA, 42440 Noiretable (FR)
(72) Inventeur: LAFLEUR, Bernard, F-69007 Lyon (FR); JOSANCY, Luc, F-69650 Sainte Colombe (FR)
(74) Mandataire: Guérin, Jean-Philippe
(86) Numéro de dépôt international: PCT/EP2012/071273
(87) Numéro de publication internationale: WO 2013/064429

(56) Documents cités:
- FR-A7- 2 381 442
- US-A- 1 550 030
- US-A- 3 059 809
- US-A- 3 272 547

## Description

La présente invention concerne un dispositif amovible de préhension pour récipient de cuisson, notamment un manche amovible pour une casserole.

Dans un souci pratique, un nombre croissant de récipients culinaires comporte une poignée de préhension amovible. Ainsi, l'encombrement d'un ensemble de casseroles et de poêles de cuisson peut être sensiblement réduit, en rangeant ces récipients sans leur poignée.

Afin de favoriser la tenue mécanique de la poignée amovible sur le récipient de cuisson, un certain nombre de récipients ont été conçus avec un plot saillant fixé à la périphérie, dit plot de prédisposition. Cependant, un tel récipient de cuisson ne permet une préhension que dans une unique position et s'avère dépendant de l'état de ce plot.

Par conséquent, la plupart des récipients de cuisson à poignée amovible sont dorénavant conçus avec des poignées amovibles pour une fixation sur des récipients de cuisson dépourvus de plots de prédisposition. Une poignée amovible sans plot de prédisposition utilise généralement le principe d'une pince appliquant des efforts de serrage sur une importante surface d'une paroi latérale du récipient de cuisson.

Le document EP1523265 décrit une poignée amovible ayant une mâchoire mobile en translation par rapport à un manche de préhension. La mâchoire mobile comporte une position de serrage dans laquelle elle plaque la paroi latérale du récipient de cuisson contre le manche de préhension, et une position de libération dans laquelle elle est écartée du manche de préhension. Afin d'assurer la sécurité de l'utilisateur, la poignée comporte un mécanisme de verrouillage conçu pour empêcher l'écartement de la mâchoire mobile quand elle est en position de serrage.

Afin d'assurer une résistance mécanique satisfaisante de la poignée amovible lorsque des efforts importants sont appliqués sur le récipient, la mâchoire mobile et le manche de préhension comportent une surface de contact avec le récipient relativement importante. Comme ces surfaces de contact doivent serrer une paroi sensiblement cylindrique de la casserole, une telle poignée s'avère inappropriée pour serrer de façon satisfaisante des récipients de cuisson de diamètres fortement distincts, ou induisent une déformation inacceptable ou une détérioration superficielle de ce récipient pour éviter la présence d'un jeu dans l'une quelconque des configurations. Ces problèmes doivent être résolus sans pour autant amoindrir la sécurité du verrouillage de la poignée amovible sur le récipient.

Le document US3059809 décrit une poignée amovible pour récipient de cuisson. La poignée comprend un corps de préhension dont une extrémité avant forme une mâchoire évasée. La poignée comporte en outre une mâchoire mobile évasée montée en rotation sur le corps de préhension.

L'invention vise à résoudre un ou plusieurs de ces inconvénients. L'invention porte ainsi sur une poignée amovible pour récipient de cuisson, comprenant :
- un corps de préhension dont une extrémité avant forme une mâchoire évasée, la mâchoire évasée comportant deux saillies adaptées à pincer la paroi d'un récipient, lesdites deux saillies étant de formes sensiblement linéaires dont les directions sont sécantes à l'avant du corps de préhension ;
- une mâchoire mobile évasée montée en rotation sur le corps de préhension autour d'un premier axe, entre une position de libération et une position de pincement, la mâchoire évasée comportant deux saillies de formes sensiblement linéaires dont les directions sont sécantes à l'avant du corps de préhension ;
- un levier d'actionnement monté en rotation sur le corps de préhension autour d'un second axe, entre une position déployée et une position rétractée ;
- un mécanisme de verrouillage de la mâchoire mobile en position de pincement, actionné par le levier d'actionnement.

Selon une variante, la mâchoire évasée du corps de préhension présente sensiblement une forme de Y, et l'extrémité avant de la mâchoire mobile évasée présente sensiblement une forme de Y.

Selon encore une variante, le corps de préhension présente un manche s'étendant jusqu'à son extrémité arrière, le manche s'étendant selon une direction formant un angle compris entre 5 et 30° par rapport à un plan incluant les directions des saillies de la mâchoire évasée du corps de préhension.

Selon une autre variante, l'intersection entre les directions des saillies du corps de préhension est située entre 80 et 150 mm à l'avant de ces saillies.

Selon encore une autre variante, la mâchoire mobile évasée comporte au moins une face destinée à venir en appui avec un récipient de cuisson dans la position de pincement, la face d'appui formant un angle compris entre 65 et 90° par rapport à la direction d'une desdites saillies de la mâchoire mobile.

Selon une variante, la mâchoire mobile évasée comporte un retrait à l'arrière de ses saillies linéaires.

Selon encore une variante, les saillies du corps de préhension et les saillies de la mâchoire mobile sont superposées lorsque la mâchoire mobile est en position de pincement.

Selon une autre variante, une distance comprise entre 0,7 mm et 3 mm est ménagée entre les saillies du corps de préhension et les saillies de la mâchoire mobile lorsque la mâchoire mobile est en position de pincement.

Selon encore une autre variante, le mécanisme de verrouillage comprend :
- un basculeur monté pivotant selon un axe parallèle à l'axe de pivotement du levier et sollicité par un effort de rappel vers une position de verrouillage ;
- un élément de verrouillage monté coulissant selon une direction radiale du basculeur et solidaire du pivotement du basculeur, l'élément de verrouillage étant logé dans un espace entre une paroi solidaire du corps de préhension et une paroi solidaire de la mâchoire mobile, cet espace se rétrécissant le long de la course de pivotement de l'élément de verrouillage induite par l'effort de rappel jusqu'à ce que le jeu entre cet élément de verrouillage et lesdites parois soit nul.

L'invention concerne également un ustensile de cuisson, comprenant :
- une poignée amovible telle que décrite ci-dessus ;
- un récipient de cuisson comportant une paroi latérale et d'une lèvre périphérique s'étendant depuis la paroi latérale et configurée pour être pincée entre la mâchoire évasée du corps de préhension et la mâchoire mobile évasée en position de pincement.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective d'un exemple d'ustensile de cuisson selon l'invention ;
- la figure 2 est une vue en inclinaison d'un mode de réalisation d'une poignée amovible pour un tel ustensile de cuisson ;
- la figure 3 est une vue en perspective éclatée de la poignée amovible de la figure 2 ;

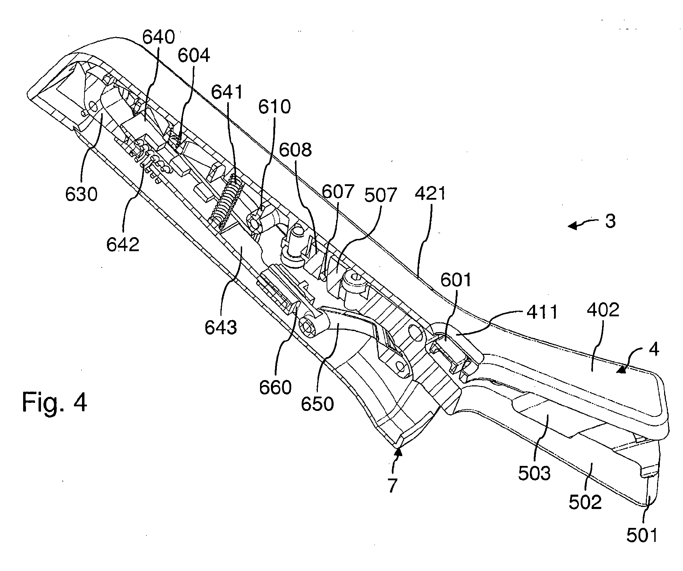

- la figure 4 est une vue en perspective en section de la poignée amovible de la figure 2 ;
- les figures 5 et 6 sont des vues de dessous d'une mâchoire fixe de la poignée amovible de la figure 2 ;
- la figure 7 est une vue en section de derrière de la mâchoire fixe des figures 5 et 6 ;
- la figure 8 est une vue de dessus d'une mâchoire mobile de la poignée amovible de la figure 2 ;
- la figure 9 est une vue de côté de la mâchoire mobile de la poignée amovible la figure 2 ;
- les figures 10 à 12 sont des vues en coupe de côté de la poignée amovible dans différentes configurations de fonctionnement.

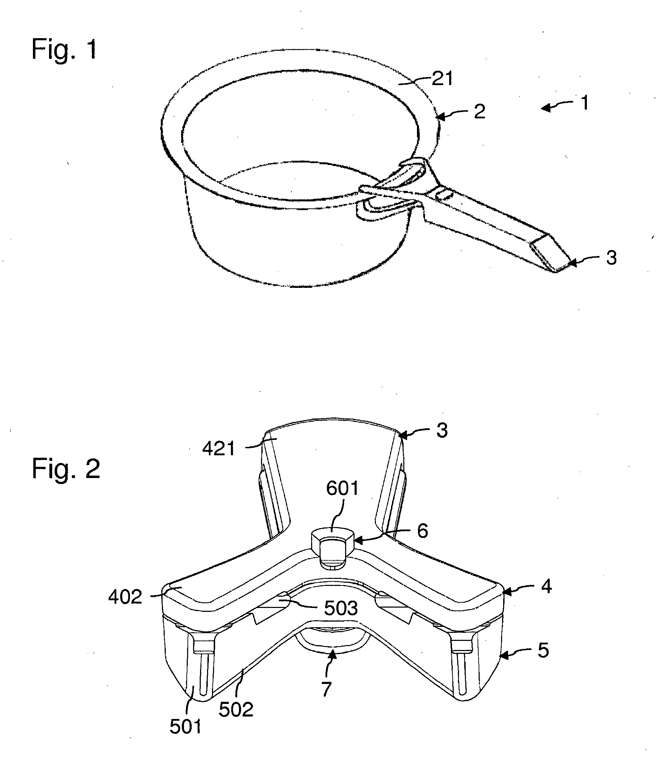

La figure 1 illustre un ustensile de cuisson 1 selon un exemple de mise en oeuvre de l'invention. L'ustensile de cuisson 1 comprend un récipient de cuisson 2, en l'occurrence une casserole. L'ustensile de cuisson 1 comprend en outre un dispositif de préhension ou poignée amovible 3. La poignée amovible 3 est fixée sur le récipient 2, le récipient 2 étant un récipient sans plot de prédisposition. La poignée amovible 3 est configurée pour se fixer sur une gamme d'ustensiles de cuisson présentant des diamètres distincts. La poignée amovible 3 est en pratique fixée par pincement de la paroi latérale du récipient 2, en particulier sur une lèvre périphérique 21 de la paroi latérale.

La figure 2 est une vue en inclinaison de la poignée amovible 3. La poignée amovible 3 comporte un corps de préhension 4, une mâchoire mobile 5, un levier d'actionnement 7 et un mécanisme de verrouillage/déverrouillage 6 de la mâchoire mobile.

Le corps de préhension 4 comporte un manche 421 s'étendant selon une direction longitudinale sur la partie arrière du corps de préhension 4. Le corps de préhension 4 comporte également une extrémité avant 402 formant une mâchoire fixe évasée. L'extrémité avant 402 s'évase latéralement par rapport au manche 421.

La mâchoire mobile 5 est montée pivotante par rapport au corps de préhension 4 autour d'un arbre transversal 512. La mâchoire mobile 5 est montée pivotante entre une position de libération et une position de pincement de la lèvre 21. Dans la position de pincement, la mâchoire mobile 5 et la mâchoire fixe sont configurées pour pincer la lèvre 21 du récipient de cuisson 2. La mâchoire mobile 5 comporte une extrémité avant évasée. L'extrémité évasée de la mâchoire mobile 5 se superpose à l'extrémité avant 402 du corps de préhension 4, en position de pincement.

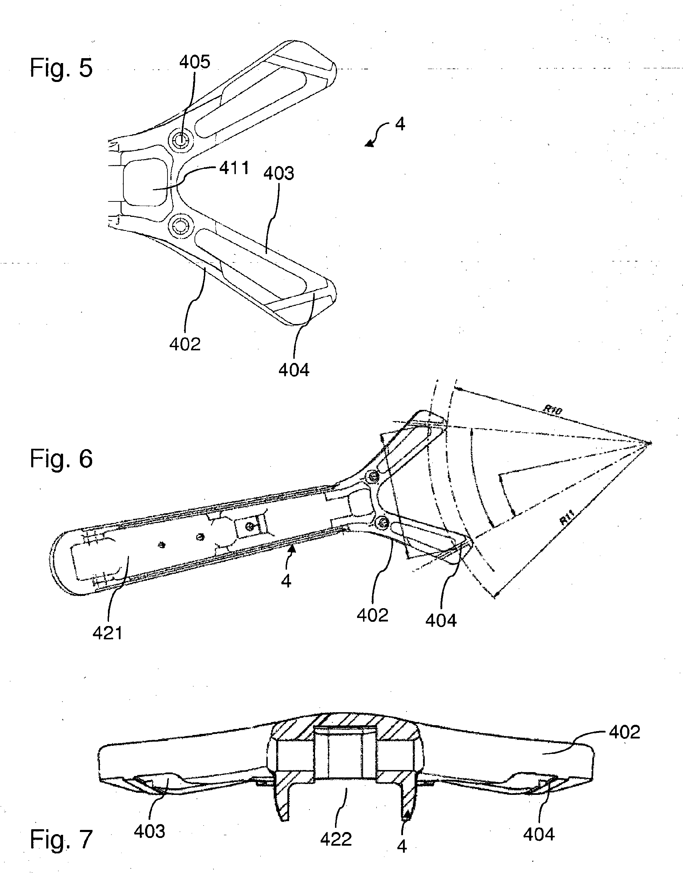

Les figures 5 à 7 illustrent plus précisément la structure du corps de préhension 4. La figure 5 est une vue de dessous de la mâchoire fixe formée à l'extrémité avant du corps de préhension 4. La mâchoire fixe comporte deux saillies 404, avantageusement disposées de part et d'autre de l'axe longitudinal du manche 421. Les saillies 404 sont ménagées au niveau de l'extrémité avant du corps de préhension 4. Les saillies 404 sont saillantes verticalement afin de former des surfaces de contact de pincement avec la lèvre périphérique 21 du récipient 2. Les saillies 404 présentent une forme sensiblement linéaire afin d'assurer une stabilité et une moindre déformation lors du contact avec la lèvre périphérique 21. Les directions des saillies 404 sont sécantes à l'avant du corps de préhension 4, comme illustré à la figure 6.

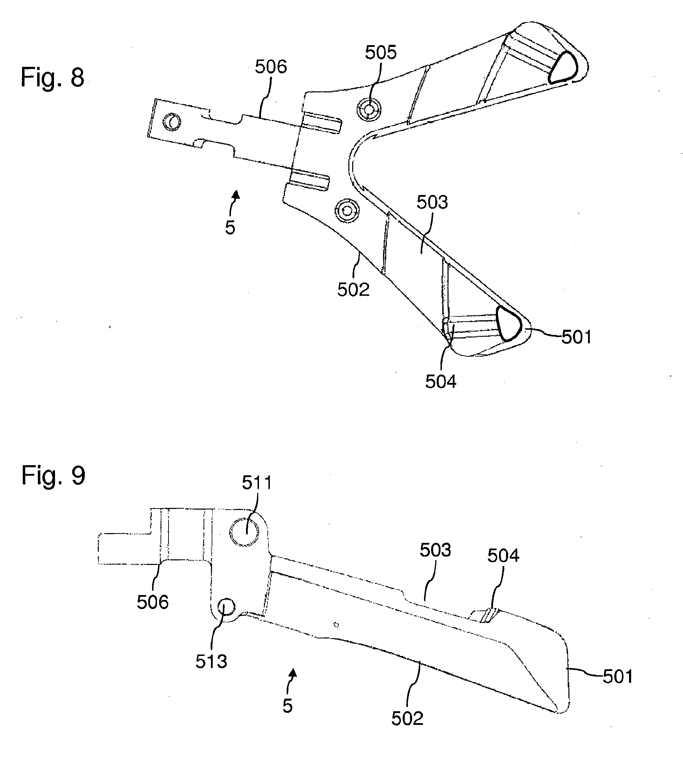

Les figures 8 et 9 illustrent plus précisément la structure de la mâchoire mobile 5. La mâchoire mobile 5 comporte deux saillies 504, avantageusement disposées de part et d'autre de l'axe longitudinal du manche 421. Les saillies 504 sont ménagées sur la face supérieure de la mâchoire mobile 5, au niveau de son extrémité avant. Les saillies 504 forment des surfaces de contact de pincement avec la lèvre périphérique 21 du récipient 2. Les saillies 504 présentent une forme sensiblement linéaire afin d'assurer une stabilité et une moindre déformation lors du contact avec la lèvre périphérique 21. Les directions des saillies 504 sont sécantes à l'avant du corps de préhension 4, dans la position de pincement. Les saillies 504 sont avantageusement superposées aux saillies 404 dans la position de pincement.

Le levier d'actionnement 7 est disposé au niveau de la partie inférieure de la poignée amovible 3. Le levier d'actionnement 7 est monté pivotant autour d'un axe transversal par rapport au corps de préhension 4 entre une position déployée et une position rétractée. Le levier d'actionnement 7 est destiné à solliciter un mécanisme de verrouillage 6 pour assurer le verrouillage de la mâchoire mobile 5 en position de pincement. Le levier d'actionnement 7 étant monté pivotant autour d'un axe parallèle à l'axe de pivotement de la mâchoire mobile 5, le pivotement du levier d'actionnement 7 vers sa position rétractée accompagne le pivotement de la mâchoire mobile 5 vers sa position de pincement.

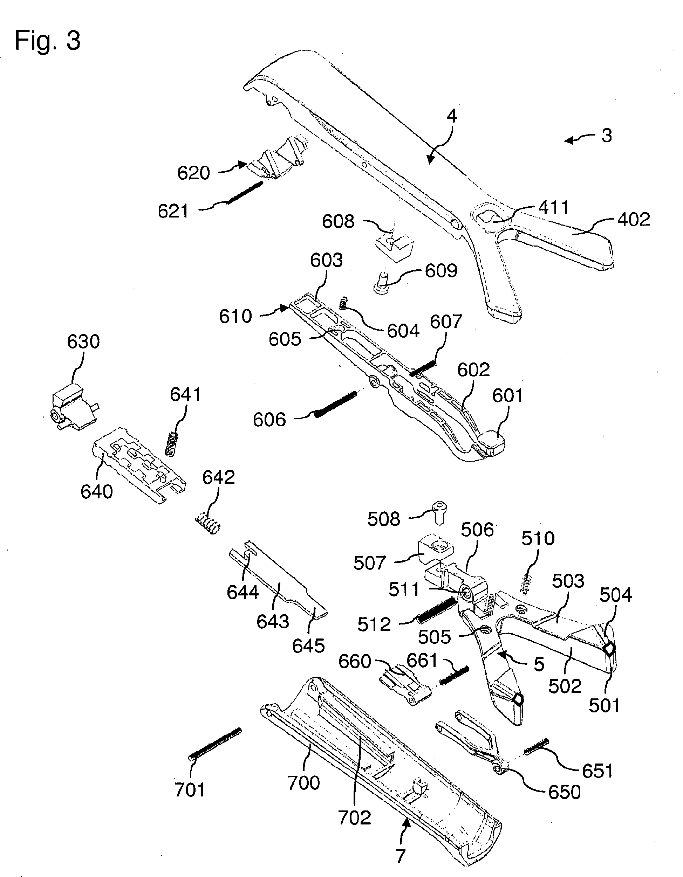

La figure 3 est une vue en perspective éclatée de la poignée amovible 3. Le levier d'actionnement 7 comporte une coque 700 montée pivotante sur l'extrémité arrière du manche 421, par l'intermédiaire d'un arbre 701. La coque 700 et le manche 421 délimitent un volume intérieur permettant de loger différents composants de la poignée 3 (le manche 421 comporte notamment un évidement 422), et délimitent une surface de préhension permettant à l'utilisateur de pouvoir appliquer des efforts de maintien sur cette poignée 3. La coque 700 permet à l'utilisateur d'exercer manuellement un couple de verrouillage sur le levier d'actionnement 7, de façon à faire pivoter ce levier d'actionnement 7 vers sa position rétractée.

Le corps de préhension 4 comporte une ouverture traversante 411. La mâchoire fixe de l'extrémité avant 402 présente avantageusement un retrait 403 ménagé à l'arrière de chaque saillie 404. Le retrait 403 permet de localiser la surface d'appui de la mâchoire fixe sur le récipient 2 uniquement au niveau des saillies 404.

Le mécanisme de verrouillage 6 comporte un étrier 620, un plot de verrouillage 608, un basculeur 610, un arbre de verrouillage 607, un étrier 650, un embout 660, une lamelle 643, un ressort 642, un embout 640 et un cliquet de verrouillage 630.

L'étrier 620 est fixé sur l'extrémité arrière du manche 421. Le plot de verrouillage 608 est fixé sur le manche 421 par l'intermédiaire d'une vis 609.

Le basculeur 610 est monté pivotant autour d'un axe transversal par rapport au corps de préhension 4. Le basculeur 610 comporte ainsi un alésage dans lequel un arbre 606 est logé, pour assurer son montage pivotant par rapport au corps de préhension 4. L'arbre 606 de l'exemple est disposé sensiblement à mi longueur du basculeur 610. Le basculeur 610 comporte une partie avant 602 ménagée à l'avant de son axe de pivotement. Un bouton de déverrouillage 601 s'étend verticalement au niveau de l'extrémité avant de la partie avant 602. Un arbre 607 s'étendant selon une direction transversale, est logé dans la partie avant 602, de façon à pouvoir coulisser radialement (selon la direction passant par l'arbre 606 au bouton 601). L'arbre 607 est par contre solidaire des mouvements de pivotement du basculeur 610. Le basculeur 610 comporte une partie arrière 603 ménagée à l'arrière de son axe de pivotement. La partie arrière 603 comporte un trou borgne 605. Le trou borgne 605 loge une extrémité d'un ressort de rappel 604. L'autre extrémité du ressort de rappel 604 est en appui contre le manche 421.

L'ouverture 411 ménagée dans le corps de préhension 4 permet un accès au bouton de déverrouillage 601. Le bouton de déverrouillage 601 est typiquement monté coulissant dans cette ouverture 411. La position de pivotement du basculeur 610 définit l'état de verrouillage/déverrouillage de la poignée amovible 3. Le ressort de rappel 604 sollicite le basculeur 610 vers sa position de verrouillage, détaillée ultérieurement.

Au niveau de la jonction entre l'extrémité avant 502 avec l'extrémité arrière 506, la mâchoire mobile 5 comporte un alésage 511 traversé par l'arbre 512. L'alésage 511 est ménagé à la jonction entre la partie avant 502 et la partie arrière 506. L'arbre 512 permet ainsi de monter la mâchoire mobile 5 pivotante par rapport au corps de préhension 4.

Un plot de verrouillage 507 est fixé sur la partie arrière 506 par l'intermédiaire d'une vis 508.

La partie avant 502 de la mâchoire mobile 5 comporte avantageusement un retrait 503 ménagé à l'arrière de chaque saillie 504. Des faces de contact 501 sont ménagées à l'avant des saillies 504 et sont destinées à servir d'appui pour la paroi latérale du récipient 2 à maintenir. Avantageusement, la partie avant 502 comporte une rupture entre une face de contact et une saillie 504. Ainsi, la mâchoire mobile 5 peut absorber les dispersions de fabrication sur le rayon de courbure entre la lèvre 21 et la paroi latérale du récipient 2.

Des ressorts de rappel 510 disposent d'une première extrémité logée dans des trous borgnes 505 ménagés dans la partie avant 502 de la mâchoire mobile 5. Les ressorts de rappel 510 disposent d'une deuxième extrémité logée dans des trous borgnes 405 de la mâchoire fixe du corps de préhension 4. Les ressorts 510 sollicitent la mâchoire mobile 5 vers sa position de libération, afin de pouvoir libérer le récipient 2 lorsque l'utilisateur appuie sur le bouton de déverrouillage 601.

Une première extrémité de l'étrier 650 est montée pivotante autour d'un axe transversal par rapport à la mâchoire mobile 5. À cet effet, la première extrémité de l'étrier 650 est traversée par un arbre 651. L'arbre 651 est monté pivotant dans un alésage 513 de la mâchoire mobile 5. L'alésage 513 est disposé sensiblement à l'aplomb de l'alésage 511, au niveau de la jonction entre la partie avant 502 et la partie arrière 506. La disposition de l'étrier 650 est avantageusement réalisée de façon ce que celui-ci exerce un effort sensiblement perpendiculaire à un axe passant par les axes des alésages 511 et 513. Une deuxième extrémité de l'étrier 650 est montée pivotante autour d'un axe transversal par rapport à un embout 660, par l'intermédiaire d'un arbre 661. L'arbre 661 reliant l'embout 660 et l'étrier 650 est monté en translation sur le levier 7 afin de faciliter le passage d'une droite d'équilibre instable. L'embout 660 est monté dans la coque 700 du levier 7.

La lamelle 643 comporte une première extrémité rétrécie 645 emboîtée dans un logement de l'embout 660. La lamelle 643 comporte une deuxième extrémité munie d'un plot 644. La deuxième extrémité de la lamelle 643 est montée coulissante à l'intérieur de l'embout 640. Une première extrémité du ressort 642 est emboîtée sur le plot 644. La deuxième extrémité du ressort 642 est emboîtée sur un plot au niveau d'une partie d'extrémité 646 de l'embout 640. L'embout 640 comporte par ailleurs un plot sur lequel une première extrémité du ressort 641 est emboîtée, sur l'avant de sa face supérieure. La deuxième extrémité du ressort 641 sollicite une face interne du manche 421. L'embout 640 est monté coulissant dans une rainure 702 ménagée dans la partie arrière de la coque 700.

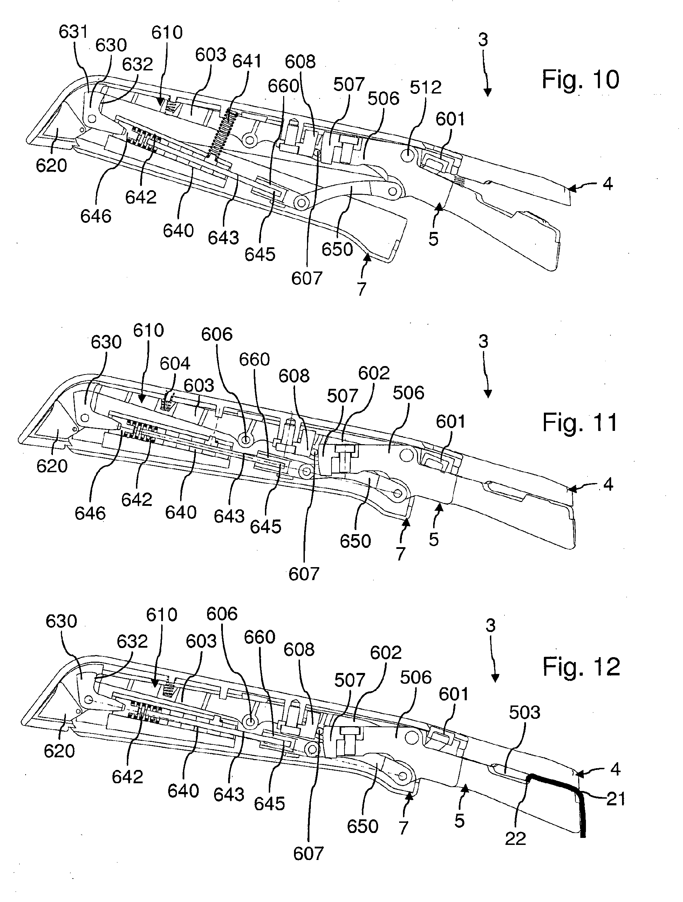

Le cliquet de verrouillage 630 est monté pivotant sur l'étrier 620, par l'intermédiaire d'un arbre 621. Le cliquet 630 comporte une première extrémité logée dans une fente de l'extrémité 646, comme illustré aux figures 10 à 12. Le cliquet 631 comporte une face supérieure de guidage 631 et une face 632 formant un décrochement par rapport à la face supérieure 631. Le cliquet 630 est solidaire en rotation du levier 7, car entraîné en rotation par l'extrémité 646.

Les figures 10 à 12 sont des vues en section de côté de la poignée amovible 3, dans différentes configurations de fonctionnement.

Dans la configuration de la figure 10, la mâchoire mobile 5 est maintenue dans sa position de libération par l'intermédiaire des ressorts 510 et 641. Cette position de libération permet d'introduire la lèvre 21 du récipient de cuisson 2 entre la mâchoire fixe et la mâchoire mobile 5. La mâchoire mobile 5 maintient le levier 7 en position déployée par l'intermédiaire de l'étrier 650 (formant une biellette de transmission d'effort entre la mâchoire 5 et le levier 7). Le levier 7 est également maintenu en position déployée par l'intermédiaire du ressort de rappel 641. Dans cette position, la partie arrière 603 du basculeur 610 repose sur une face de guidage 631 du cliquet 630. Le basculeur 610 est ainsi dans une position de pivotement qui maintient l'arbre de verrouillage 607 dans une position rabaissée. Dans cette position rabaissée, l'arbre de verrouillage 607 est logé avec un jeu dans un logement ménagé entre le plot de verrouillage 608 et le plot de verrouillage 507.

Dans la configuration de la figure 11, la poignée amovible 3 est dans une position intermédiaire de sa cinématique de verrouillage. Dans cette position, l'utilisateur sollicite manuellement le levier 7. Le mouvement de rétractation du levier 7 sollicite la mâchoire mobile 5 vers sa position de pincement, par l'intermédiaire de l'étrier 650. L'ensemble formé des embouts 640, 660et de la lamelle 643 est alors entraîné en rotation sensiblement autour de l'axe de rotation du cliquet 630. Le cliquet 630 pivote progressivement vers l'arrière, du fait du pivotement induit sur l'embout 640 par le levier 7. La partie arrière 603 du basculeur 610 glisse sur la face de guidage 631 et se rapproche du décrochement 632 du cliquet 630. Le basculeur 610 est encore maintenu dans sa position de déverrouillage. Le pivotement de la mâchoire mobile 5 induit un pivotement de sa partie arrière 506. L'arbre de verrouillage 607 est encore maintenu avec du jeu entre les deux plots de verrouillage 608 et 507. Du fait d'une forme bombée du plot 507, le jeu de l'arbre 607 entre les plots 608 et 507 se réduit lors du pivotement de la mâchoire mobile 5.

Dans la configuration de la figure 12, la poignée amovible 3 est dans sa position de pincement. Dans cette position, la genouillère, formée par l'association de l'étrier 650, des embouts 640 et 660 et de la lamelle 643, maintient la mâchoire mobile 5 de façon stable en position de pincement. L'utilisation d'une genouillère est particulièrement avantageuse, puisqu'un effort d'ouverture exercé sur la mâchoire mobile 5 sollicite la genouillère vers une position stable de verrouillage. Dans cette position, le levier 7 est suffisamment sollicité pour que le cliquet 630 soit pivoté vers l'arrière. L'extrémité de la partie arrière 603 du basculeur 610 atteint le décrochement 632 du cliquet 630. Du fait de la sollicitation du ressort 604, le basculeur 610 pivote de sorte que la partie arrière 603 du basculeur 610 est rabaissée, tandis que la partie avant 602 du basculeur 610 est relevée, jusqu'à ce que le bouton de déverrouillage 601 vienne se loger dans l'ouverture 411. Lors du pivotement du basculeur 610, l'arbre 607 glisse sur la face bombée du plot de verrouillage 507, jusqu'à atteindre une position de verrouillage dans laquelle il est maintenu sans jeu entre le plot de verrouillage 608 et le plot de verrouillage 507. Comme illustré, la lèvre 21 du récipient de cuisson 2 peut être maintenue de façon stable pincée entre la mâchoire mobile 5 et la mâchoire fixe du corps de préhension 4.

Dans cette position de pincement, le bouton de déverrouillage 601 est accessible pour l'utilisateur. Pour procéder au déverrouillage, l'utilisateur appuie sur le bouton 601 et exerce un effort suffisant pour comprimer le ressort de rappel 604. Le basculeur 610 pivote alors et l'extrémité de sa partie arrière 603 glisse sur le décrochement 632, jusqu'à atteindre la face de guidage 631, le ressort de rappel faisant pivoter le cliquet 630 vers l'avant, de sorte que la face de guidage 631 maintient alors le basculeur 610 en position de déverrouillage. Durant le pivotement du basculeur 610, la partie avant 602 du basculeur 610 entraîne l'arbre 607 vers le bas jusqu'à une position où il présente à nouveau un jeu par rapport aux plots de verrouillage 608 et 507. L'arbre 607 n'assure alors plus le verrouillage de la mâchoire mobile 5 en position de pincement.

Une poignée amovible 3 selon l'invention permet de saisir une grande variété de récipients de cuisson présentant des diamètres distincts, sans induire de rayure ou de déformation de ceux-ci. Les saillies de forme linéaire permettent notamment de s'adapter aisément à une grande gamme de diamètres différents de récipients de chauffage. Différents tests ont permis de déterminer que la poignée amovible s'avérait parfaitement appropriée pour assurer la saisie d'un récipient de cuisson 2 comportant un diamètre compris entre 140 et 320 mm (correspondant au diamètre extérieur de la paroi latérale), et une épaisseur de la lèvre 21 comprise entre 0,7 et 3mm, avantageusement entre 1 et 2,5 mm.

Le mouvement de verrouillage par pivotement du levier 7 s'avère particulièrement rassurant pour l'utilisateur, puisque ce pivotement du levier 7 induit un pivotement de pincement similaire sur la mâchoire mobile 5. L'utilisateur a ainsi l'impression d'agir directement sur l'organe demande pincement. Un pincement induit par pivotement du levier 7 permet en outre à l'utilisateur d'exercer aisément un effort de verrouillage de grande amplitude.

Le verrouillage en position de pincement de la mâchoire mobile 5 est particulièrement fiable, puisque celui-ci est exercé directement par l'arbre 607 et l'étrier 650 sur cette mâchoire mobile 5. On évite ainsi d'introduire des jeux sur la chaîne de verrouillage.

Le verrouillage de la mâchoire mobile 5 en position de pincement par une cinématique de genouillère est particulièrement sécurisant pour l'utilisateur, puisque celui-ci dispose d'un retour d'information par passage d'un point dur lorsque le verrouillage par l'arbre 607 est effectif.

L'utilisation d'une mâchoire fixe sur le corps de préhension 4 permet de limiter le nombre d'éléments mobiles parmi les éléments participant au pincement, ce qui garantit un pincement fiable et avec un minimum de jeu de la lèvre 21. L'utilisation de la mâchoire fixe permet également d'obtenir une rigidité optimale de la poignée amovible 3.

La combinaison d'une grande rigidité des mâchoires et de l'absence de jeu dans le mécanisme de verrouillage 6 en position de pincement permet d'assurer un maintien du contact avec la lèvre 21 sans nécessiter un effort de pincement excessif qui aboutirait à une détérioration superficielle du récipient 2.

L'utilisation du ressort 642 permet de désaccoupler la mâchoire mobile 5 du levier 7 sur la fin de course de ce levier 7, de façon à limiter et maîtriser l'effort de pincement exercé sur la lèvre 21 du récipient 2, ce qui permet d'éviter une détérioration superficielle de la lèvre 21 et permet d'utiliser des ustensiles de chauffage comportant des lèvres d'épaisseurs différentes.

L'ouverture 411 est avantageusement ménagée au niveau de l'extrémité avant du corps de préhension 4, par exemple au niveau de l'évasement de la mâchoire fixe. Le bouton de déverrouillage 601 est alors aisément accessible pour l'utilisateur.

L'extrémité avant 402 comporte en pratique une forme en Y, avec deux branches s'étendant latéralement par rapport à la direction longitudinale. Un évidement est ainsi ménagé entre les deux branches, de façon à libérer un accès maximal à l'intérieur du récipient 2 et de façon à éviter des interférences avec un éventuel couvercle du récipient 2. L'extrémité avant de la mâchoire mobile 5 comporte également en pratique une forme en Y, avec deux branches s'étendant latéralement par rapport à la direction longitudinale. Un évidement est ainsi ménagé entre les deux branches, de façon à éviter une interférence de la mâchoire mobile 5 avec la paroi latérale du récipient 2, et également faciliter le lavage de la poignée amovible 3. Afin d'assurer une stabilité et un effort de maintien optimaux sur le récipient 2, les saillies 404 sont avantageusement distantes d'au moins 50mm, et sont avantageusement distantes d'une amplitude comprise entre 60 et 70 mm.

L'intersection entre les directions des saillies 404 est avantageusement située entre 80 et 150 mm à l'avant de ces saillies 404 (illustré par la distance R10 à la figure 6. Cette distance pourra être de façon optimale comprise entre 90 et 110 mm, et de façon préférentielle de l'ordre 200 mm. Les saillies 404 présenteront avantageusement une longueur comprise entre 15 et 25 mm, pour disposer d'une surface d'appui adéquate sur la lèvre 21, et assurer une bonne résistance au moment de flexion induit par le récipient 2. La partie centrale des saillies 404 pourra par exemple présenter une distance optimale (illustré par R11) comprise entre 100 et 120 mm par rapport à l'intersection entre les directions de ces saillies 404. En projection sur un plan incluant la direction longitudinale, les directions des saillies 404 formeront avantageusement un angle compris entre 12 et 22° avec cette direction longitudinale. Les saillies 404 présentent avantageusement une épaisseur comprise entre 0,5 et 2,5 mm.

Afin de disposer d'un récipient 2 comportant une lèvre 21 inclinée vers l'intérieur, la direction longitudinale forme avantageusement un angle compris entre 5 et 30° par rapport à un plan incluant les directions des saillies 404.

Le plot de verrouillage 507 présente avantageusement un rayon de courbure correspondant à sa distance de l'axe de l'alésage 511. Lors du pivotement de la mâchoire mobile 5, le jeu entre l'arbre 607 et le plot de verrouillage 507 reste donc constant, pour une position donnée de l'arbre de 607. Le plot de verrouillage 608 est avantageusement sensiblement plat. Ainsi, lorsque l'arbre 607 est sollicité en pivotement vers le haut, le jeu entre les plots 507 et 608 se réduit progressivement, afin d'obtenir un verrouillage progressif de la mâchoire 5 dans sa position de pincement.

Les faces de contact 501 de la mâchoire mobile 5 sont avantageusement de forme sensiblement linéaire, de façon à pouvoir fournir une surface d'appui satisfaisante pour différents diamètres de récipients 2. Afin de fournir une surface d'appui satisfaisante pour une paroi latérale sensiblement verticale du récipient 2, les surfaces d'appui 501 sont avantageusement sensiblement verticales et perpendiculaires à l'axe longitudinal de la poignée amovible 3, lorsque la mâchoire mobile 5 est dans sa position de pincement. Les surfaces d'appui 501 peuvent avantageusement former un angle compris entre 65 et 90° par rapport à la direction des saillies 504. Afin de fournir une grande résistance contre le pivotement du récipient 2 sans induire un encombrement excessif, les faces de contact 501 s'étendent avantageusement sur une longueur comprise entre 10 mm et 25 mm. Du fait de l'évasement de la mâchoire mobile 5 les surfaces de contact 501 sont suffisamment écartées pour empêcher un pivotement de la poignée amovible 3 par rapport au récipient 2 autour d'un axe vertical. Les surfaces 501 sont par exemple distantes d'au moins 50 mm l'une de l'autre.

La lèvre périphérique 21 du récipient 2 présente avantageusement une forme sensiblement conique, avec un angle au sommet du cône avantageusement compris entre 60 et 85°. Ainsi, les profils des lèvres 21 pour des récipients 2 de différents diamètres présentent des différences relativement réduites. Les sections transversales des différentes lèvres 21 sont en effet identiques. Comme illustré à la figure 12, la lèvre périphérique 21 comporte avantageusement un rebord recourbé 22, facilitant le verrouillage de la lèvre 21 lorsque celle-ci est pincée par la poignée amovible 3. Le rebord 22 de la lèvre 21 vient en prise dans le retrait 503, de sorte que le récipient 2 n'est pas maintenu fixé à la poignée uniquement par friction.

Avec la combinaison du récipient 2 et de la poignée amovible 3 selon le mode de réalisation illustré, la poignée 3 ne fait quasiment pas saillie à l'intérieur du récipient. En effet, l'extrémité avant 402 du corps de préhension 4 sert essentiellement de surface d'appui en longueur sur la lèvre 21, pour résister au moment de flexion induit par le récipient 2.

## Revendications

1. Poignée amovible (3) pour récipient de cuisson (2), comprenant:
- un corps de préhension (4) dont une extrémité avant (402) forme une mâchoire évasée, la mâchoire évasée comportant deux saillies (404) adaptées à pincer la paroi d'un récipient, lesdites deux saillies étant de formes sensiblement linéaires dont les directions sont sécantes à l'avant du corps de préhension (4) ;
- une mâchoire mobile (5) évasée montée en rotation sur le corps de préhension (4) autour d'un premier axe, entre une position de libération et une position de pincement, la mâchoire évasée comportant deux saillies (504) de formes sensiblement linéaires dont les directions sont sécantes à l'avant du corps de préhension (4) ;
- un levier d'actionnement (7) monté en rotation sur le corps de préhension autour d'un second axe, entre une position déployée et une position rétractée ;
- un mécanisme de verrouillage (6) de la mâchoire mobile en position de pincement, actionné par le levier d'actionnement.

2. Poignée amovible (3) selon la revendication 1, dans laquelle la mâchoire évasée du corps de préhension présente sensiblement une forme de Y, et dans laquelle l'extrémité avant de la mâchoire mobile (5) évasée présente sensiblement une forme de Y.

3. Poignée amovible selon la revendication 1 ou 2, dans laquelle le corps de préhension (4) présente un manche (421) s'étendant jusqu'à son extrémité arrière, le manche s'étendant selon une direction formant un angle compris entre 5 et 30° par rapport à un plan incluant les directions des saillies de la mâchoire évasée du corps de préhension.

4. Poignée amovible selon l'une quelconque des revendications précédentes, dans lequel l'intersection entre les directions des saillies du corps de préhension est située entre 80 et 150 mm à l'avant de ces saillies.

5. Poignée amovible selon l'une quelconque des revendications précédentes, dans lequel la mâchoire mobile évasée (5) comporte au moins une face (501) destinée à venir en appui avec un récipient de cuisson (2) dans la position de pincement, la face d'appui (501) formant un angle compris entre 65 et 90° par rapport à la direction d'une desdites saillies (504) de la mâchoire mobile.

6. Poignée amovible selon l'une quelconque des revendications précédentes, dans laquelle la mâchoire mobile évasée comporte un retrait (503) à l'arrière de ses saillies linéaires (504).

7. Poignée amovible (3) selon l'une quelconque des revendications précédentes, dans laquelle les saillies (404) du corps de préhension (4) et les saillies (504) de la mâchoire mobile (5) sont superposées lorsque la mâchoire mobile est en position de pincement.

8. Poignée amovible (3) selon la revendication 7, dans laquelle une distance comprise entre 0,7 mm et 3 mm est ménagée entre les saillies (404) du corps de préhension (4) et les saillies (504) de la mâchoire mobile (5) lorsque la mâchoire mobile est en position de pincement.

9. Poignée amovible (3) selon l'une quelconque des revendications précédentes, dans lequel le mécanisme de verrouillage (6) comprend :
- un basculeur (610) monté pivotant selon un axe parallèle à l'axe de pivotement du levier (7) et sollicité par un effort de rappel vers une position de verrouillage ;
- un élément de verrouillage (607) monté coulissant selon une direction radiale du basculeur et solidaire du pivotement du basculeur (610), l'élément de verrouillage étant logé dans un espace entre une paroi (608) solidaire du corps de préhension (4) et une paroi (507) solidaire de la mâchoire mobile (5), cet espace se rétrécissant le long de la course de pivotement de l'élément de verrouillage induite par l'effort de rappel jusqu'à ce que le jeu entre cet élément de verrouillage et lesdites parois soit nul.

10. Ustensile de cuisson (1), comprenant :
- une poignée amovible (3) selon l'une quelconque des revendications précédentes ;
- un récipient de cuisson (2) comportant une paroi latérale et d'une lèvre périphérique (21) s'étendant depuis la paroi latérale et configurée pour être pincée entre la mâchoire évasée du corps de préhension (4) et la mâchoire mobile évasée (5) en position de pincement.

## Patentansprüche

1. Abnehmbarer Griff (3) für ein Kochgefäß (2), welcher aufweist:
- einen Greifkörper (4), von dem ein vorderes Ende (402) eine aufgeweitete Klemmbacke bildet, wobei die aufgeweitete Klemmbacke zwei Vorsprünge (404) aufweist, die dafür eingerichtet sind, die Wand eines Gefäßes einzuklemmen, wobei die zwei Vorsprünge im Wesentlichen geradlinige Formen aufweisen, deren Richtungen sich vor dem Greifkörper (4) schneiden;
- eine aufgeweitete bewegliche Klemmbacke (5), die um eine erste Achse zwischen einer Freigabeposition und einer Klemmposition drehbar an dem Greifkörper (4) angebracht ist, wobei die aufgeweitete Klemmbacke zwei Vorsprünge (504) von im Wesentlichen geradlinigen Formen aufweist, deren Richtungen sich vor dem Greifkörper (4) schneiden;
- einen Betätigungshebel (7), der um eine zweite Achse zwischen einer ausgeklappten Position und einer zurückgezogenen Position drehbar an dem Greifkörper angebracht ist;
- einen Mechanismus (6) zur Verriegelung der beweglichen Klemmbacke in der Klemmposition, welcher durch den Betätigungshebel betätigt wird.

2. Abnehmbarer Griff (3) nach Anspruch 1, wobei die aufgeweitete Klemmbacke des Greifkörpers im Wesentlichen eine Y-Form aufweist und wobei das vordere Ende der aufgeweiteten beweglichen Klemmbacke (5) im Wesentlichen eine Y-Form aufweist.

3. Abnehmbarer Griff nach Anspruch 1 oder 2, wobei der Greifkörper (4) ein Heft (421) aufweist, das sich bis zu seinem hinteren Ende erstreckt, wobei sich das Heft in einer Richtung erstreckt, die einen zwischen 5 und 30° betragenden Winkel bezüglich einer Ebene bildet, welche die Richtungen der Vorsprünge der aufgeweiteten Klemmbacke des Greifkörpers enthält.

4. Abnehmbarer Griff nach einem der vorhergehenden Ansprüche, wobei sich der Schnittpunkt zwischen den Richtungen der Vorsprünge des Greifkörpers zwischen 80 und 150 mm vor diesen Vorsprüngen befindet.

5. Abnehmbarer Griff nach einem der vorhergehenden Ansprüche, wobei die aufgeweitete bewegliche Klemmbacke (5) mindestens eine Seite (501) aufweist, die dazu bestimmt ist, an einem Kochgefäß (2) in der Klemmposition zur Anlage zu kommen, wobei die Anlageseite (501) einen zwischen 65 und 90° betragenden Winkel bezüglich der Richtung eines der Vorsprünge (504) der beweglichen Klemmbacke bildet.

6. Abnehmbarer Griff nach einem der vorhergehenden Ansprüche, wobei die aufgeweitete bewegliche Klemmbacke hinter ihren geradlinigen Vorsprüngen (504) einen Rücksprung (503) aufweist.

7. Abnehmbarer Griff (3) nach einem der vorhergehenden Ansprüche, wobei die Vorsprünge (404) des Greifkörpers (4) und die Vorsprünge (504) der beweglichen Klemmbacke (5) übereinander angeordnet sind, wenn sich die bewegliche Klemmbacke in der Klemmposition befindet.

8. Abnehmbarer Griff (3) nach Anspruch 7, wobei ein zwischen 0,7 mm und 3 mm betragender Abstand zwischen den Vorsprüngen (404) des Greifkörpers (4) und den Vorsprüngen (504) der beweglichen Klemmbacke (5) ausgebildet ist, wenn sich die bewegliche Klemmbacke in der Klemmposition befindet.

9. Abnehmbarer Griff (3) nach einem der vorhergehenden Ansprüche, wobei der Verriegelungsmechanismus (6) aufweist:
- ein Kippglied (610), das um eine zur Schwenkachse des Hebels (7) parallele Achse schwenkbar angebracht ist und durch eine Rückholkraft zu einer Verriegelungsposition hin belastet ist;
- ein Verriegelungselement (607), das in einer radialen Richtung des Kippgliedes gleitend angebracht ist und mit dem Kippglied (610) schwenkfest verbunden ist, wobei das Verriegelungselement in einem Zwischenraum zwischen einer mit dem Greifkörper (4) fest verbundenen Wand (608) und einer mit der beweglichen Klemmbacke (5) fest verbundenen Wand (507) aufgenommen ist, wobei sich dieser Zwischenraum entlang des Schwenkweges des Verriegelungselements, der durch die Rückholkraft hervorgerufen wird, verengt, bis das Spiel zwischen diesem Verriegelungselement und den Wänden null ist.

10. Kochgerät (1), welches aufweist:
- einen abnehmbaren Griff (3) nach einem der vorhergehenden Ansprüche;
- ein Kochgefäß (2), das eine Seitenwand und eine Umfangslippe (21), die sich von der Seitenwand aus erstreckt und dafür ausgebildet ist, zwischen der aufgeweiteten Klemmbacke des Greifkörpers (4) und der aufgeweiteten beweglichen Klemmbacke (5) in der Klemmposition festgeklemmt zu werden, aufweist.

## Claims

1. Removable handle assembly (3) for a cooking vessel (2), including:
- a gripping body (4) a front end (402) of which forms a flared jaw, the flared jaw including two projections (404) adapted to clamp the wall of a vessel, said two projections being of substantially linear shape in directions that intersect in front of the gripping body (4);
- a flared mobile jaw (5) mounted on the gripping body (4) to rotate about a first axis between a release position and a clamping position, the flared jaw including two projections (504) of substantially linear shape in directions that intersect in front of the gripping body (4);
- an actuating lever (7) mounted on the gripping body to rotate about a second axis between a deployed position and a retracted position;
- a mechanism (6) actuated by the actuating lever for locking the mobile jaw in the clamping position.

2. Removable handle assembly (3) according to Claim 1, in which the flared jaw of the gripping body is substantially Y-shaped and the front end of the flared mobile jaw (5) is substantially Y-shaped.

3. Removable handle assembly according to Claim 1 or 2, in which the gripping body (4) includes a handle (421) extending to its rear end, the handle extending in a direction forming an angle between 5 and 30° relative to a plane including the directions of the projections of the flared jaw of the gripping body.

4. Removable handle assembly according to any one of the preceding claims, in which the intersection between the directions of the projections of the gripping body is located between 80 and 150 mm in front of these projections.

5. Removable handle assembly according to any one of the preceding claims, in which the flared mobile jaw (5) includes at least one face (501) intended to bear on a cooking vessel (2) in the clamping position, the bearing face (501) forming an angle between 65 and 90° relative to the direction of one of said projections (504) of the mobile jaw.

6. Removable handle assembly according to any one of the preceding claims, in which the flared mobile jaw includes a recessed portion (503) to the rear of its linear projections (504).

7. Removable handle assembly (3) according to any one of the preceding claims, in which the projections (404) of the gripping body (4) and the projections (504) of the mobile jaw (5) are superposed when the mobile jaw is in the clamping position.

8. Removable handle assembly (3) according to Claim 7, in which there is a distance between 0.7 mm and 3 mm between the projections (404) of the gripping body (4) and the projections (504) of the mobile jaw (5) when the mobile jaw is in the clamping position.

9. Removable handle assembly (3) according to any one of the preceding claims, in which the locking mechanism (6) includes:
- a swing-arm (610) mounted to pivot about an axis parallel to the pivot axis of the lever (7) and urged toward a locking position by a return force;
- a locking member (607) mounted to slide in a radial direction of the swing-arm (610) and constrained to pivot with the swing-arm, the locking member being accommodated in a space between a wall (608) fastened to the gripping body (4) and a wall (507) fastened to the mobile jaw (5), this space reducing in size along the pivoting travel of the locking member induced by the return force until the clearance between this locking member and said walls is zero.

10. Cooking utensil (1), including:
- a removable handle assembly (3) according to any one of the preceding claims;
- a cooking vessel (2) including a lateral wall and a peripheral lip (21) extending from the lateral wall and configured to be clamped between the flared jaw of the gripping body (4) and the flared mobile jaw (5) in the clamping position.
